# FASCICULE DE BREVET EUROPEEN

(11) **EP 1 164 311 B1**
(45) Date de publication et mention de la délivrance du brevet: **08.04.2009**
(21) Numéro de dépôt: 01401568.9
(22) Date de dépôt: 15.06.2001
(51) Int. Cl.: F16D 23/02, F16D 23/06, F16H 3/12, F16H 3/087

(54) **Procédé et mécanisme de changement de vitesses sous couple**
Verfahren und Mechanismus zum Schalten unter Drehmoment
Process and mechanism for shifting gears under torque

(30) Priorité: 23.06.2000 FR 0008063; 16.06.2000 FR 0007678
(43) Date de publication de la demande: 19.12.2001
(73) Titulaire: RENAULT S.A.S., 92100 Boulogne Billancourt (FR)
(72) Inventeur: Losq, Robert, 78310 Maurepas (FR); Raoul, Michel, 78990 Elancourt (FR)

(56) Documents cités:
- EP-A- 1 031 769
- FR-A- 2 225 651
- FR-A- 2 764 956
- US-A- 5 105 927
- US-A- 5 503 039
- US-A- 5 816 378

## Description

La présente invention se rapporte aux boîtes de vitesses pour véhicule automobile à arbres parallèles.

Elle trouve une application privilégiée, mais non limitative, sur une boîte de vitesses mécanique comportant cinq rapports de marche avant et un rapport de marche arrière.

Plus précisément, l'invention concerne les changements de rapports sous couple dans un mécanisme de changement de vitesses à arbres parallèles comportant au moins quatre descentes d'engrenages constituées d'un pignon fou et d'un pignon fixe, associées par groupe de deux à des moyens de couplage communs par anneaux de couplage à cônes de friction, et agencées de manière que les deux rapports commandés par chaque groupe de deux descentes ne soient pas de rang successif.

Pour faciliter la robotisation et le changement de rapports sous couple dans une boîte de vitesses à arbres parallèles, il est connu de grouper par deux les rapports, et de prévoir que le passage d'un rapport de marche avant de rang n à un rapport de marche avant de rang n+1 s'effectue en désactivant le groupe de deux rapports comportant le rapport n, et en activant simultanément le groupe de deux rapports comportant le rapport n+1.

La publication US 5,503,039 décrit à ce sujet une boîte où chaque rapport est associé à un dispositif de synchronisation et où les pignons sont agencés de manière inhabituelle à celle que l'on rencontre dans une boîte de vitesses manuelle pour répondre aux exigences de la grille des vitesses conventionnelle. En effet, sont groupés en paire, d'une part les rapports de première et de troisième, et d'autre part les rapports de deuxième et de quatrième. Cette disposition, choisie pour la robotisation, permet d'actionner simultanément plusieurs synchroniseurs, et de réduire le temps de changement de rapport qui ne peut se faire qu'avec l'ouverture de l'embrayage intercalé entre le moteur et la boîte de vitesses, c'est-à-dire avec rupture de couple.

Par la publication WO 98/59181, on connaît un dispositif de couplage dont l'anneau de synchronisation comporte des ergots d'entraînement, coopérant avec des évidements du moyeu à flancs inclinés par rapport à l'axe de rotation de celui-ci, permettant d'utiliser le couple à transmettre pour multiplier la poussée axiale à exercer sur l'anneau pour transmettre le couple. Ces ergots ont un plan de symétrie et les flancs inclinés, la même capacité de multiplication de la poussée axiale en tirage et en rétro, et en inversion de couple. Du contact flanc tirage au contact flanc rétro, l'ergot dispose d'un jeu dépendant de l'inclinaison des flancs, de la course de mise en place de l'anneau sur le cône et de l'usure du cône. Le changement de contact peut être le siège d'un choc, d'un bruit et d'une oscillation de la chaîne cinématique perçus comme autant de désagréments.

La présente invention vise à réaliser des changements de rapports sous couple sans avoir besoin de fermer l'embrayage d'entrée d'une transmission mécanique, robotisée ou non.

Dans ce but, elle propose que les changements de rapports montants du rapport n au rapport n+1, s'effectuent en couplant progressivement le pignon fou du rapport n+1 sur son arbre par un anneau de couplage jusqu'au délestage complet de l'anneau de couplage du rapport n, en le désactivant à cet instant, en poursuivant le couplage progressif du rapport n+1 de façon à égaliser la vitesse du pignon fou correspondant et celle de son arbre, et en transmettant le couple moteur à ce dernier pignon par le cône de friction de son anneau de couplage.

De préférence, l'égalisation des vitesses et la transmission du couple entre les pignons fous et leur arbre sont assurées par les mêmes surfaces de friction.

Selon un mode de réalisation particulier de l'invention, les anneaux de couplage sont déplacés par des baladeurs.

L'invention concerne également un mécanisme de changement de vitesses.

Ce mécanisme présente un arbre primaire supportant deux dentures fixes, un premier et un second groupe de pignons fous disposés de part et d'autre de deux moyeux fixes, deux paires d'anneaux de couplage des pignons fous sur leur moyeu fixe, deux baladeurs, et un arbre secondaire supportant une denture fixe d'engrènement avec une couronne de différentiel, un groupe de pignons fous, un moyeu fixe, des anneaux de couplage des pignons fous sur leur moyeu fixe, un baladeur et quatre dentures fixes.

La présente invention vise à améliorer dans la phase transitoire d'inversion de couple le dispositif connu de la publication WO 98/59181, et de réduire les désagréments acoustique et vibratoire de celui-ci.

Dans ce but, elle propose un anneau de couplage comportant des ergots asymétriques ayant un flanc incliné et un plan parallèle à l'axe de rotation du moyeu, le flanc incliné transmettant le couple en transformant partiellement celui-ci en poussée axiale dans le sens du « tirage » (passages montants), et un flanc droit et parallèle à l'axe de rotation de l'anneau intervenant dans le sens « rétro » (passages descendants).

Cette disposition permet d'une part de réduire le jeu « contact à contact » entre l'anneau et le moyeu, et d'autre part de situer, en l'absence d'auto-assistance, la capacité de transmission du couple à un niveau faible, comparativement aux surcouples transitoires élevés générés normalement dans ce type de manoeuvre en l'absence de disposition particulière. Lors d'un dépassement de la capacité de transmission de couple, on a un glissement, réel mais limité, de l'anneau par rapport au pignon, entraînant une dissipation d'énergie, et un amortissement des chocs et des oscillations.

D'autres caractéristiques et avantages de l'invention apparaîtront clairement à la lecture de la description suivante d'un mode de réalisation particulier de celle-ci, en se reportant au dessins annexés, sur lesquels :
- la figure 1 est un schéma d'architecture simplifié d'un mécanisme de changement de vitesses conforme à l'invention.
- la figure 2 est une vue en demi-coupe axiale du dispositif de synchronisation et de couplage en position repos ;
- la figure 2A est une vue partielle de la figure 1 du dispositif au repos
- la figure 2B est une vue partielle de la figure 1 du dispositif en action en tirage ;
- la figure 2C est une vue partielle de la figure 1 du dispositif en action en rétro.

La boîte de vitesses 10 représentée sur la figuré 1 comprend de façon classique, un arbre d'entrée, dit arbre primaire 100, et un arbre intermédiaire dit arbre secondaire 200.

De droite à gauche, l'arbre primaire porte une denture 101, coopérant avec le moyeu d'une friction d'embrayage 150, une première denture fixe 102 du pignon fou du premier rapport de marche avant , une deuxième denture fixe 103 du pignon fou du rapport de marche arrière, un premier groupe de rapports de marche avant constitué du pignon fou du deuxième rapport de marche avant 110, composé d'une denture d'engrènement 111 et d'un cône femelle 112 et du pignon fou du quatrième rapport de marche avant 120, composé d'une denture d'engrènement 121 et d'un cône femelle 122. Entre ces deux pignons sont intercalés un moyeu 130 lié en rotation à l'arbre primaire 100, et de part et d'autre de celui-ci des cônes 140 de synchronisation et de couplage. Ces anneaux de couplage coopèrent avec les cônes 112 et 122 des pignons 110 et 120 et sont mis en action par le baladeur 150. Enfin, l'arbre primaire porte un deuxième groupe de rapports de marche avant constitué du pignon fou du troisième rapport de marche avant 160, composé d'une denture d'engrènement 161 et d'un cône femelle 162 et du pignon fou du cinquième rapport de marche avant 170, composé d'une denture d'engrènement 171 et d'un cône femelle 172. Entre ces deux pignons sont intercalés un même moyeu 130 lié en rotation à l'arbre primaire 100, et de part et d'autre, des cônes 141 de synchronisation et de couplage. Ces anneaux de couplage coopèrent avec les cônes 162 et 172 des pignons 160 et 170 et sont mis en action par le baladeur 151.

De droite à gauche, l'arbre secondaire 200 porte une denture 201 d'engrènement avec une denture de couronne de pont (non représentée), un groupe de rapports constitué du premier rapport de marche avant 180 composé d'une denture d'engrènement 181 avec le pignon fixe 102 et d'un cône femelle 182, et du rapport de marche arrière 190 composé d'une denture d'engrènement 191 avec le pignon fixe 103 et d'un cône femelle 192. Entre ces deux pignons sont intercalés un moyeu 130 lié en rotation à l'arbre secondaire 200, et de part et d'autre des cônes 142 de synchronisation et de couplage. Ces anneaux de couplage coopèrent avec les cônes 182 et 192 des pignons 180 et 190 et sont mis en action par le baladeur 152. L'arbre secondaire comporte quatre dentures fixes 210, 220, 230, 240 respectivement des rapports de deuxième, quatrième, troisième et cinquième engrenant avec les pignons fous correspondants portés par l'arbre primaire.

Comme indiqué plus haut, l'invention prévoit que les changements de rapport montants du rapport n au rapport n+1, s'effectuent en couplant progressivement le pignon fou du rapport n+1 sur son arbre par un anneau de couplage, jusqu'au délestage complet de l'anneau de couplage du rapport n, en le désactivant à cet instant, en poursuivant le couplage progressif du rapport n+1 de façon à égaliser la vitesse du pignon fou correspondant et celle de son arbre, et en transmettant le couple moteur à ce dernier pignon par le cône de friction de son anneau de couplage.

En prenant l'exemple d'un passage de deuxième en troisième, le changement de rapport s'effectue donc de la manière suivante. En deuxième, le pignon 110 est couplé à l'arbre primaire par l'anneau de couplage 140. L'action de passer en troisième consiste à coupler progressivement le pignon 160 à l'arbre primaire à l'aide de l'anneau 141 en agissant sur le baladeur 151. Cette action déleste en couple le rapport de deuxième. Lorsque le délestage complet est atteint, le baladeur 150 libère l'anneau 140. Le couplage du pignon de troisième se poursuit par maintien de la pression du baladeur 150 qui permet l'égalisation des vitesses du pignon et de l'arbre primaire, puis la transmission du couple moteur. l'égalisation des vitesses et la transmission du couple entre les pignons fous et leur arbre sont assurées par les mêmes surfaces de friction.

Comme indiqué sur le schéma, le mécanisme comporte des baladeurs 150, 151, 152, assurant le déplacement des anneaux de couplage 112, 122, 162, 172, 182, 192, pour effectuer la synchronisation et la transmission du couple entre les pignons fous, 110, 120, 160, 170, 180, 190 et les moyeux fixes correspondants. Enfin, la commande des baladeurs, et donc des anneaux de couplage, peut avantageusement être robotisée.

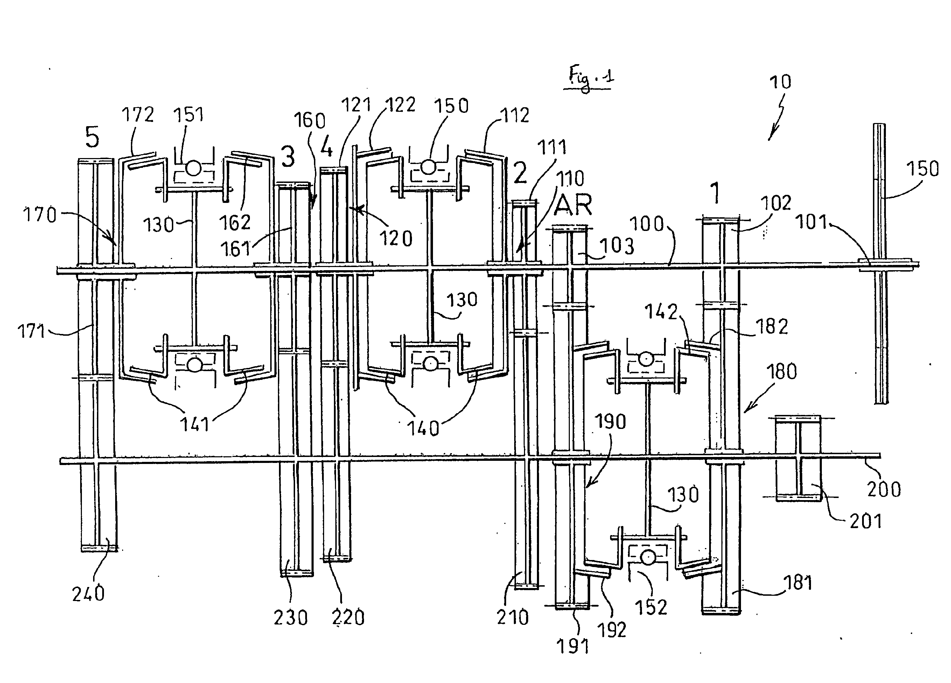

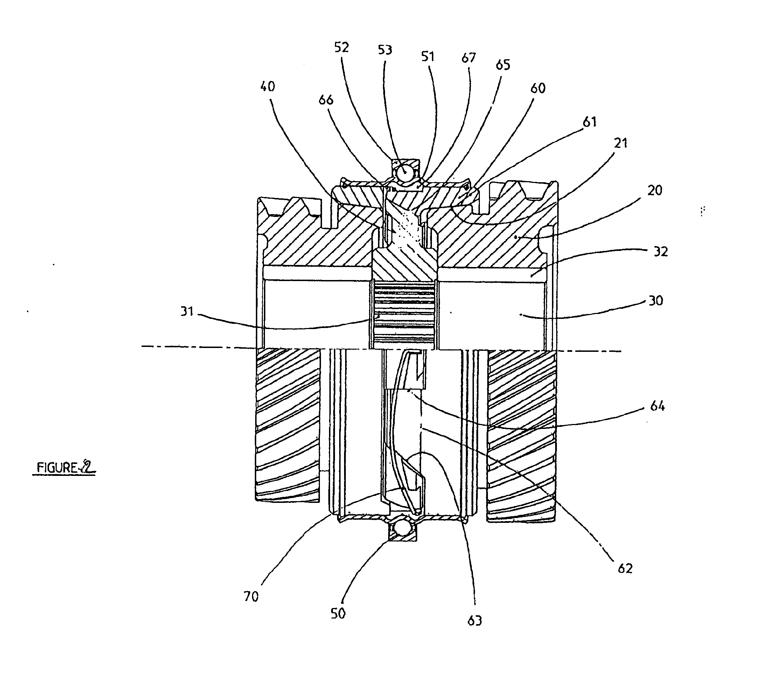

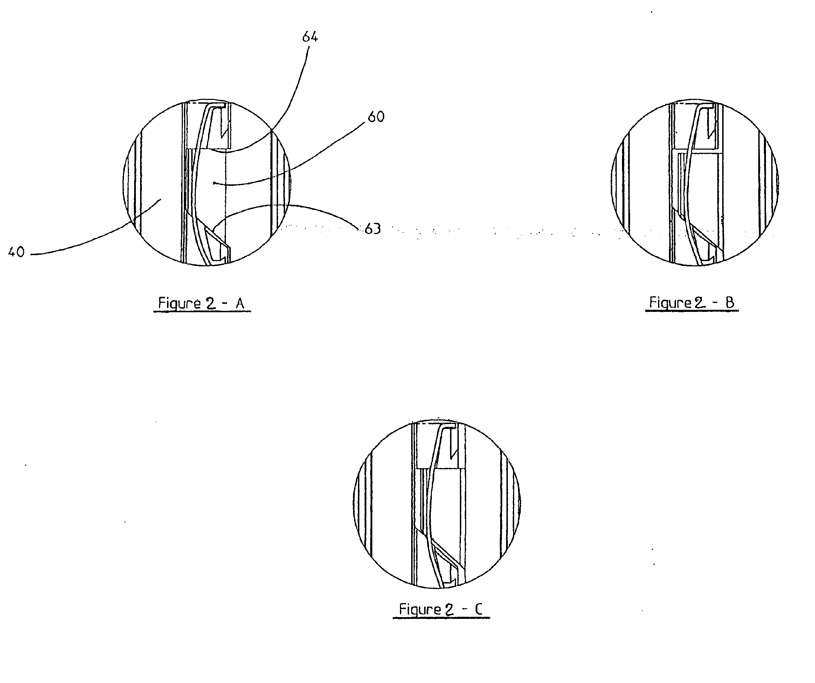

On voit sur la figure 2 l'ensemble d'un dispositif 11 pour la synchronisation et le couplage en rotation d'un pignon fou 20 à rotation sur un arbre 30 d'une boîte de vitesses de véhicule automobile (Telle que celle de la figure 1)

Dans la description qui va suivre, le dispositif 11 présente une symétrie de conception par rapport à un plan vertical médian qui permet la synchronisation et le couplage d'un deuxième pignon fou 20. Il ne sera par conséquent décrit que la partie du dispositif permettant la synchronisation et le couplage du pignon de droite.

Conventionnellement, en ce qui concerne la partie du dispositif qui est décrite en référence à la partie droite de la figure 2 l'arbre 30 possède des cannelures 31 d'entraînement en rotation d'un moyeu 40 maintenu axialement par une bague 32 supportant le pignon fou 20. Le moyeu coopère avec un baladeur 50, capable de se déplacer axialement sur celui-ci sous le contrôle d'une fourchette de passage des vitesses (non représentée). En se déplaçant, le baladeur 50, constitué d'une bague intérieure 51 d'une bague extérieure 52 et de corps roulants 53, repousse l'anneau de synchronisation 60 axialement à l'arbre, en direction du pignon 20, tournant fou sur la bague 32.

De façon classique, chaque anneau 60 comporte une surface conique de frottement 61, rencontrant une surface complémentaire de frottement 21 du pignon 20, de façon à assurer la synchronisation de ce dernier avec l'arbre porteur 30 (ou le moyeu 40), sous la poussée du baladeur 50. L'anneau 60, présente plusieurs ergots 62 (trois dans l'exemple de réalisation non limitatif illustré par la figure 2), qui font face au moyeu 40. Conformément à l'invention, les ergots présentent deux flancs d'appui non symétriques par rapport à l'axe du moyeu, à savoir un premier flanc d'appui incliné par rapport à l'axe du moyeu, et un second flanc d'appui parallèle à celui-ci.

Les ergots coopèrent avec le moyeu par leur face d'appui 63 inclinée par rapport à l'axe de rotation de l'ensemble 10 ou par leur face 64 parallèle au même axe de rotation. Les ergots ont la forme d'un trapèze rectangle et les évidements correspondants du moyeu ont un profil similaire. Une face conique 65 assure le centrage de l'anneau au repos par rapport au moyeu.

La figure 2 fait également apparaître un jonc élastique 70 de forme ondulée. Le jonc repousse l'anneau 60 vers sa position repos contre la moyeu 40 en prenant appui alternativement sur les épaulements 66 de chaque anneau. De préférence, le jonc 70 est ouvert et est replié à une de ses extrémités de façon à être indexé angulairement par rapport au moyeu. Le jonc 70 prend appui radialement dans l'évidement circulaire à l'extérieur des ergots 62.

Le fonctionnement de ce dispositif est le suivant. Au repos, le jonc 70 repousse mutuellement les anneaux 60 qui prennent appui par la face conique 65 sur le moyeu 40. Les ergots 62 se positionnent selon la représentation de la figure 2A, et il n'y a pas de jeu entre l'anneau et le moyeu en raison du double contact par les faces 63 et 64. Sous la poussée axiale d'une fourchette de passage de vitesses (non représentée), sur la bague extérieure 52 du baladeur 50, la bague intérieure 51 déplace l'anneau de couplage 60 en direction du pignon 20, jusqu'à mise en contact par des faces coniques 61 et 21. Par frottement, l'anneau, entraîné par le pignon va prendre appui sur le moyeu soit coté flanc incliné 63 soit coté flanc parallèle 64 suivant les vitesses différentielles. Le flanc incliné est placé de sorte qu'il serve d'appui dans le sens tirage, et c'est, par conséquent, ce même flanc qui sert d'appui lors de la synchronisation en passage dit montant. Dans le cas d'une synchronisation en passage montant (le contact est illustré par la figure 2B) la capacité de synchronisation puis de transmission de couple de l'anneau est donc multipliée grâce à la poussée axiale induite sur lui-même par l'appui sur le flanc incliné du moyeu. A contrario, lors d'une inversion de couple (le contact est illustré par la figure 2C). levée de pied de 1 'accélérateur par exemple, on passe sur le flanc parallèle et la capacité de synchronisation et de transmission de couple ne dépend plus que de la poussée exercée par le baladeur, et est fortement réduite par rapport au sens tirage.

Ainsi le système a une capacité de synchronisation, de transmission de couple et un comportement très différents en tirage et en rétro. Très capacitif dans le sens tirage, il permet, selon un dimensionnement approprié, des passages montants très rapides puis la transmission de la totalité du couple moteur. Peu capacitif en rétro, il est incapable de transmettre, lors de l'inversion de couple, les surcouples, et, par glissement et dissipation d'énergie, il amortit les oscillations de la chaîne cinématique et les à-coups du véhicule.

Ce mécanisme présente de nombreux avantages. Parmi ceux-ci nous pouvons citer les plus importants :
- suppression de plusieurs phases du changement de rapport et principalement la phase de crabotage ;
- passage de vitesse montant sous couple, c'est-à-dire, sans ouverture de l'embrayage de couplage du moteur et de la boîte ;
- amortissement des à-coups de couple.

En conclusion, il faut également souligner l'intérêt de placer le pignon fou du rapport de deuxième sur l'arbre primaire car à puissance et énergie dissipées identiques, la pression spécifique sur l'anneau de couplage est plus faible puisque le niveau de couple à transmettre est moins élevé comparativement à celui d'un pignon sur l'arbre secondaire.

## Revendications

1. Procédé de changement de rapport sous couple dans un mécanisme à arbres parallèles (100, 200), comportant au moins quatre descentes d'engrenages constituées d'un pignon fou (110, 120, 160, 170, 180, 190) et d'une denture fixe (102, 103, 210, 220, 230, 240) sur son arbre, associées par groupe de deux à des moyens de couplage communs par anneaux de couplage (112, 122, 162, 172, 182, 192, 11) à cônes de friction et agencées de manière que les deux rapports commandés par chaque groupe de deux descentes ne soient pas de rang successif, **caractérisé en ce que** les changements de rapport montants du rapport n au rapport n+1, s'effectuent en couplant progressivement le pignon fou du rapport n+1 sur son arbre par un anneau de couplage, jusqu'au délestage complet de l'anneau de couplage du rapport n, en le désactivant à cet instant, en poursuivant le couplage progressif du rapport n+1 de façon à égaliser la vitesse du pignon fou correspondant et celle de son arbre, et en transmettant le couple moteur à ce dernier pignon par le cône de friction de son anneau de couplage.

2. Procédé de changement de rapport selon la revendication 1, **caractérisé en ce que** l'égalisation des vitesses et la transmission du couple entre les pignons fous (110, 120, 160, 170, 180, 190, 20) et leur arbre (100, 200) sont assurées par les anneaux de couplage (112, 122, 162, 172, 182, 192, 30).

3. Procédé de changement de rapport selon la revendication 1 ou 2, **caractérisé en ce que** les anneaux de couplage sont déplacés par des baladeurs (150, 151, 152,50).

4. Procédé de changement de rapport selon l'une des revendication précédentes, **caractérisé en ce que** la commande des anneaux de couplage (112, 122, 162, 172, 182, 192, 30) est robotisée.

5. Mécanisme de changement de rapport pour mettre en oeuvre le procédé selon l'une des revendications précédentes, **caractérisé en ce qu'**il présente un arbre primaire (100) supportant deux dentures fixes (102, 103) un premier et un second groupe de pignons fous (110,120 ; 160, 170) disposés de part et d'autre de deux moyeux fixes (130), deux paires d'anneaux de couplage (112, 122 ; 162, 172) et deux baladeurs (150, 151), et un arbre secondaire (200) supportant une denture fixe (201) d'engrènement avec une couronne de différentiel, un groupe de pignons fous (180,190) un moyeu (130), des anneaux de couplage (182, 192), un baladeur (152) et quatre dentures fixes (210, 220, 230, 240).

6. Mécanisme de changement de vitesses selon la revendication 5, **caractérisé en ce que** les deux groupes de pignons fous (110, 120 ;160, 170) portés par l'arbre primaire (100) correspondent respectivement aux second et au quatrième rapport, et au troisième et au cinquième rapport de marche avant.

7. Mécanisme de changement de vitesses selon la revendication 5 ou 6, **caractérisé en ce que** l'arbre secondaire (200) porte les pignons fous (180, 190) du premier rapport de marche avant et de la marche arrière.

8. Mécanisme de changement de vitesses selon la revendication 5, 6 ou 7, **caractérisé en ce que** les pignons fous (110, 120, 160, 170, 180, 190) et les anneaux de couplage (112, 122, 162, 172, 182, 192) présentent des surface de friction coniques assurant la synchronisation et la transmission du couple entre les moyeux fixes (130) et les pignons fous.

9. Mécanisme de changement de vitesses selon la revendication 8 **caractérisé en ce que** les surfaces de frottement sont interposées avec jeu entre le moyeu fixe et le pignon fou.

10. Mécanisme de changement de vitesses selon la revendication 8 ou 9 **caractérisé en ce que** les anneaux de couplage sont munis d'ergots d'entraînement (62) coopérant avec des évidements du moyeu qui lui permettent de transformer le couple reçu du moyeu en poussée axiale contre le pignon de façon à transmettre lui-même le couple par friction entre l'arbre et le pignon après égalisation de leur vitesse, **caractérisé en ce que** les ergots (62) présentent deux flancs d'appui (63, 64) non symétriques par rapport à l'axe du moyeu (40).

11. Mécanisme de changement de vitesses selon la revendication 9 ou 10 **caractérisé en ce que** les ergots (62) présentent un premier flanc d'appui (63) incliné par rapport à l'axe du moyeu, et un second flanc d'appui (64) parallèle à celui-ci.

12. Mécanisme de changement de vitesses selon la revendication 11 **caractérisé en ce que** l'anneau (60) est en appui sur le moyeu (40) par les premiers flancs (63) des ergots lors des passages montants, et par les seconds (64) lors des passages descendants.

13. Mécanisme de changement de vitesses selon l'une des revendications 9 à 12 **caractérisé en ce que** l'anneau (60) est un anneau simple cône.

14. Mécanisme de changement de vitesses selon l'une des revendications 9 à 13 **caractérisé en ce que** les ergots (62) ont la forme générale d'un trapèze rectangle, et **en ce que** les évidements du moyeu ont une forme similaire.

15. Mécanisme de changement de vitesses selon l'une des revendications 9 à 13 **caractérisé en ce que** l'anneau (60) présente une face d'appui conique (65) sur le moyeu, assurant son centrage sur celui-ci au repos.

16. Mécanisme de changement de vitesses selon l'une des revendications 9 à 13 **caractérisé en ce que** l'anneau (60) est en contact avec le moyeu (40) par ses deux flancs d'appui (63,64), en position de repos.

17. Mécanisme de changement de vitesses selon l'une des revendications 9 à 16 **caractérisé en ce qu'**il comporte un jonc élastique (70) de forme ondulée repoussant élastiquement vers leur position centrée sur le moyeu (40) deux anneaux de synchronisation (60) symétriques, en prenant alternativement appui sur des épaulements (66) de chacun d'eux.

18. Mécanisme de changement de vitesses selon la revendication 17 **caractérisé en ce que** le jonc (70) est ouvert et replié à l'une de ses extrémités, de façon à être indexé angulairement par rapport au moyeu (40).

19. Mécanisme de changement de vitesses selon la revendication 18 **caractérisé en ce que** le jonc (70) prend appui radialement sur les anneaux (60) à l'extérieur des ergots (62).

## Claims

1. Method of changing gear under torque in a parallel shafts (100, 200) mechanism comprising at least four gear sets consisting of an idling pinion (110, 120, 160, 170, 180, 190) and of a fixed tooth set (102, 103, 210, 220, 230, 240) on its shaft, these being associated in groups of two with common means of coupling using coupling rings (112, 122, 162, 172, 182, 192, 11) with friction cones and arranged in such a way that the two ratios controlled by each group of two sets are not of successive rank, **characterized in that** the upshifts from ratio n to ratio n+1 take place by gradually coupling the idling pinion of ratio n+1 to its shaft using a coupling ring until the coupling ring of ratio n has been completely unloaded, and then at that moment deactivating it while continuing the progressive coupling of the ratio n+1 so as to equalize the speed of the corresponding idling pinion with that of its shaft, and transmitting engine torque to the latter pinion via the friction cone of its coupling ring.

2. Gear change method according to Claim 1, **characterized in that** the equalizing of the speeds and the transmission of torque between the idling pinions (110, 120, 160, 170, 180, 190, 20) and their shaft (100, 200) are performed by the coupling rings (112, 122, 162, 172, 182, 192, 30).

3. Gear change method according to Claim 1 or 2, **characterized in that** the coupling rings are moved by sliders (150, 151, 152, 50).

4. Gear change method according to one of the preceding claims, **characterized in that** the control of the coupling rings (112, 122, 162, 172, 182, 192, 30) is automated.

5. Gear change mechanism for implementing the method according to one of the preceding claims, **characterized in that** it has a primary shaft (100) supporting two fixed tooth sets (102, 103), a first and a second group of idling pinions (110, 120; 160, 170) located on each side of two fixed hubs (130), two pairs of coupling rings (112, 122; 162, 172) and two sliders (150, 151), and a secondary shaft (200) supporting a fixed tooth set (201) for meshing with a differential annulus gear, a group of idling pinions (180, 190), a hub (130), coupling rings (182, 192), a slider (152) and four fixed tooth sets (210, 220, 230, 240).

6. Gear change mechanism according to Claim 5, **characterized in that** the two groups of idling pinions (110, 120; 160, 170) borne by the primary shaft (100) correspond respectively to the second and fourth forward gears and to the third and fifth forward gears.

7. Gear change mechanism according to Claim 5 or 6, **characterized in that** the secondary shaft (200) bears the idling pinions (180, 190) of the first forward gear and of reverse gear.

8. Gear change mechanism according to Claim 5, 6 or 7, **characterized in that** the idling pinions (110, 120, 160, 170, 180, 190) and the coupling rings (112, 122, 162, 172, 182, 192) have conical friction surfaces that synchronize and transmit torque between the fixed hubs (130) and the idling pinions.

9. Gear change mechanism according to Claim 8, **characterized in that** the friction surfaces are inserted with clearance between the fixed hub and the idling pinion.

10. Gear change mechanism according to Claim 8 or 9, **characterized in that** the coupling rings are equipped with driving pins (62) collaborating with recesses in the hub that allow it to convert the torque received from the hub into axial thrust against the pinion so that it itself transmits the torque through friction between the shaft and the pinion once their speeds have equalized, **characterized in that** the pins (62) have two pressing flanks (63, 64) that are asymmetrical with respect to the axis of the hub (40).

11. Gear change mechanism according to Claim 9 or 10, **characterized in that** the pins (62) have a first pressing flank (63) that is inclined with respect to the axis of the hub, and a second pressing flank (64) that is parallel to that axis.

12. Gear change mechanism according to Claim 11, **characterized in that** the ring (60) presses against the hub (40) via the first flanks (63) of the pins during upshifts, and via the second flanks (64) during downshifts.

13. Gear change mechanism according to one of Claims 9 to 12, **characterized in that** the ring (60) is a simple cone ring.

14. Gear change mechanism according to one of Claims 9 to 13, **characterized in that** the pins (62) are in the overall shape of a rectangular trapezium, and **in that** the recesses in the hub are of a similar shape.

15. Gear change mechanism according to one of Claims 9 to 13, **characterized in that** the ring (60) has a conical face (65) for pressing against the hub, ensuring that it self-centres on this hub at rest.

16. Gear change mechanism according to one of Claims 9 to 13**, characterized in that** the ring (60) is in contact with the hub (40) via its two pressing flanks (63, 64) in the rest position.

17. Gear change mechanism according to one of Claims 9 to 16, **characterized in that** it comprises an elastic snap ring (70) of undulating shape that elastically pushes two symmetric synchronous rings (60) back into their centred position on the hub (40) by pressing alternately against shoulders (66) belonging to each.

18. Gear change mechanism according to Claim 17, **characterized in that** the snap ring (70) is open and bent at one of its ends so that it can be angularly indexed with respect to the hub (40).

19. Gear change mechanism according to Claim 18, **characterized in that** the snap ring (70) presses radially against the rings (60) on the outside of the pins (62).

## Patentansprüche

1. Verfahren zum Gangwechsel unter Drehmoment in einem Parallelwellenmechanismus (100, 200), der wenigstens vier Abtriebszahnradpaare aufweist, die jeweils aus einem beweglichem Ritzel (110, 120, 160, 170, 180, 190) und aus einer festen Zahnung (102, 103, 210, 220, 230, 240) auf seiner Welle gebildet sind, die in Zweiergruppen gemeinsamen Kopplungsmitteln durch Kopplungsringe (112, 122, 162, 172, 182, 192, 11) mit Reibungskegeln zugeordnet sind und in der Weise angeordnet sind, dass die von jeder Gruppe aus zwei Abtrieben gesteuerten Gänge nicht von aufeinander folgendem Rang sind, **dadurch gekennzeichnet, dass** die Hochschaltvorgänge vom Gang n zum Gang n + 1 **dadurch** ausgeführt werden, dass das bewegliche Ritzel des Gangs n + 1 an seiner Welle allmählich durch einen Kopplungsring gekoppelt wird, bis der Kopplungsring des Gangs n vollständig entlastet ist, wobei er zu diesem Zeitpunkt deaktiviert wird, wobei die allmähliche Kopplung des Gangs n + 1 in der Weise folgt, dass die Geschwindigkeit des entsprechenden beweglichen Ritzels an jene seiner Welle angeglichen wird, und wobei das Motordrehmoment an dieses letztere Ritzel über einen Reibungskegel seines Kopplungsrings übertragen wird.

2. Gangwechselverfahren nach Anspruch 1, **dadurch gekennzeichnet, dass** die Angleichung der Geschwindigkeiten und die Übertragung des Drehmoments zwischen den beweglichen Ritzeln (110, 120, 160, 170, 180, 190, 20) und ihrer Welle (100, 200) durch die Kopplungsringe (112, 122, 162, 172, 182, 192, 30) gewährleistet werden.

3. Gangwechselverfahren nach Anspruch 1 oder 2, **dadurch gekennzeichnet, dass** die Kopplungsringe durch Schubgabeln (150, 151, 152, 50) verlagert werden.

4. Gangwechselverfahren nach einem der vorhergehenden Ansprüche, **dadurch gekennzeichnet, dass** die Steuerung der Kopplungsringe (112, 122, 162, 172, 182, 192, 30) automatisiert ist.

5. Gangwechselmechanismus zum Ausführen des Verfahrens nach einem der vorhergehenden Ansprüche, **dadurch gekennzeichnet, dass** er eine Primärwelle (100), die zwei feste Zahnungen (102, 103), eine erste und eine zweite Gruppe beweglicher Ritzel (110, 120; 160, 170), die beiderseits von zwei festen Naben (130) angeordnet sind, zwei Paare von Kopplungsringen (112, 122; 162, 172) und zwei Schubgabeln (150, 151) trägt, und eine Sekundärwelle (200), die eine feste Zahnung (201) für den Eingriff mit einem Tellerrad, eine Gruppe beweglicher Ritzel (180, 190), eine Nabe (130), Kopplungsringe (182, 192), eine Schubgabel (152) und vier feste Zahnungen (210, 220, 230, 240) trägt, enthält.

6. Gangwechselmechanismus nach Anspruch 5, **dadurch gekennzeichnet, dass** die zwei Gruppen beweglicher Ritzel (110, 120; 160, 170), die von der Primärwelle (100) getragen werden, dem zweiten und dem vierten bzw. dem dritten und dem fünften Vorwärtsgang entsprechen.

7. Gangwechselmechanismus nach Anspruch 5 oder 6, **dadurch gekennzeichnet, dass** die Sekundärwelle (200) die beweglichen Ritzel (180, 190) des ersten Vorwärtsgangs und des Rückwärtsgangs trägt.

8. Gangwechselmechanismus nach Anspruch 5, 6 oder 7, **dadurch gekennzeichnet, dass** die beweglichen Ritzel (110, 120, 160, 170, 180, 190) und die Kopplungsringe (112, 122, 162, 172, 182, 192) konische Reibungsoberflächen aufweisen, die die Synchronisation und die Drehmomentübertragung zwischen den festen Naben (130) und den beweglichen Ritzeln gewährleisten.

9. Gangwechselmechanismus nach Anspruch 8, **dadurch gekennzeichnet, dass** die Reiboberflächen mit Spiel zwischen die feste Nabe und das bewegliche Ritzel eingefügt sind.

10. Gangwechselmechanismus nach Anspruch 8 oder 9, **dadurch gekennzeichnet, dass** die Kopplungsringe mit Antriebsnasen (62) versehen sind, die mit Aussparungen der Nabe zusammenwirken, die dieser ermöglichen, das von der Nabe aufgenommene Drehmoment in einen axialen Schub gegen das Ritzel umzuwandeln, derart, dass das Drehmoment zwischen der Welle und dem Ritzel nach Angleichung ihrer Geschwindigkeiten durch Reibung übertragen wird, **dadurch gekennzeichnet, dass** die Nasen (62) zwei Anschlagflanken (63, 64) aufweisen, die in Bezug auf die Achse der Nabe (40) nicht symmetrisch sind.

11. Gangwechselmechanismus nach Anspruch 9 oder 10, **dadurch gekennzeichnet, dass** die Nasen (62) eine erste Abstützflanke (63), die in Bezug auf die Achse der Nabe geneigt ist, und eine zweite Abstützflanke (64), die hierzu parallel ist, aufweisen.

12. Gangwechselmechanismus nach Anspruch 11, **dadurch gekennzeichnet, dass** der Ring (60) an der Nabe (40) bei Hochschaltvorgängen über die ersten Flanken (63) der Nasen und bei Herunterschaltvorgängen über die zweiten (64) Flanken anliegt.

13. Gangwechselmechanismus nach einem der Ansprüche 9 bis 12, **dadurch gekennzeichnet, dass** der Ring (60) ein einfacher Kegelring ist.

14. Gangwechselmechanismus nach einem der Ansprüche 9 bis 13, **dadurch gekennzeichnet, dass** die Nasen (62) die allgemeine Form eines rechtwinkligen Trapezes haben und dass die Aussparungen der Nabe eine ähnliche Form haben.

15. Gangwechselmechanismus nach einem der Ansprüche 9 bis 13, **dadurch gekennzeichnet, dass** der Ring (60) eine konische Abstützfläche (65) an der Nabe aufweist, die seine Zentrierung an ihr im Ruhezustand gewährleistet.

16. Gangwechselmechanismus nach einem der Ansprüche 9 bis 13, **dadurch gekennzeichnet, dass** der Ring (60) mit der Nabe (40) über seine zwei Abstützflanken (63, 64) in der Ruhestellung in Kontakt ist.

17. Gangwechselmechanismus nach einem der Ansprüche 9 bis 16, **dadurch gekennzeichnet, dass** er einen elastischen Sprengring (70) mit Wellenform aufweist, der zwei symmetrische Synchronisationsringe (60) elastisch in ihre zentrierte Stellung an der Nabe (40) schiebt, indem er sich abwechselnd an den Schultern (66) jeder von ihnen abstützt.

18. Gangwechselmechanismus nach Anspruch 17, **dadurch gekennzeichnet, dass** der Sprengring (70) offen ist und an einem seiner Enden umgebogen ist, derart, dass er in Winkelrichtung in Bezug auf die Nabe (40) indexiert ist.

19. Gangwechselmechanismus nach Anspruch 18, **dadurch gekennzeichnet, dass** sich der Sprengring (70) radial an den Ringen (60) außerhalb der Nasen (62) abstützt.
